# EUROPÄISCHE PATENTSCHRIFT

(11) **EP 0 837 260 B1**
(45) Veröffentlichungstag und Bekanntmachung des Hinweises auf die Patenterteilung: **24.05.2000**
(21) Anmeldenummer: 97117897.5
(22) Anmeldetag: 16.10.1997
(51) Int. Cl.: F16D 65/092

(54) **Bremsbelaghalterung, insbesondere für Schienenfahrzeuge**
Brake pad retaining system, especially for railway vehicles
Fixation de garnitures de freins, en particulier pour véhicules ferroviaires

(30) Priorität: 18.10.1996 DE 19643172
(43) Veröffentlichungstag der Anmeldung: 22.04.1998
(73) Patentinhaber: KNORR-BREMSE Systeme für Schienenfahrzeuge GmbH, 80809 München (DE)
(72) Erfinder: Wirth, Xaver, Dr., 85737 Ismaning (DE); Schörwerth, Mathias, 82538 Geretsried (DE); Weiss, Robert, Dr., 85757 Karlsfeld (DE)

(56) Entgegenhaltungen:
- EP-A- 0 226 816
- EP-A- 0 667 465
- DE-A- 3 517 469
- DE-A- 3 905 150
- DE-A- 4 436 457
- DE-A- 19 505 113
- US-A- 2 077 551
- US-A- 4 662 483

## Beschreibung

Die Erfindung betrifft eine Bremsbelaghalterung nach Patentanspruch 1.

Bremsbeläge von Schienenfahrzeugen, welche in Schwalbenschwanzführungen von Belaghaltern einführbar sind, sind mit dem Nachteil eines gewissen Spiels behaftet. Der Bremsbelag kann sich nach dem Bremsenlösen der Bremsbacken von dem die Schwalbenschwanzführung aufweisenden Belaghalter in Richtung der Oberfläche der Bremsscheibe bewegen. Dadurch kommt es zum Schleifen der Reibbeläge an den Bremsscheiben. Die Folge sind erhöhter Belagverschleiß, Schrägverschleiß als auch Scheibenverschleiß, insbesondere bei hohen Scheibendrehzahlen, also bei Hochgeschwindigkeitszügen und bei Einsatz in Motorwellenscheibenbremsen. Das genannte Problem ist bei schweren Belägen, also bei Sinterbremsbelägen, noch größer.

Bei neueren Belagführungen umfaßt ein Belagträger wenigstens teilweise mit Laschen einen ihn tragenden Belaghalter und ist an einer Stirnseite wenigstens mit einem Bolzen gegenüber Verschieben arretierbar. An der Sohle eines derartigen Belagträgers sind mehrere Gruppen von an Trägerblechen montierten Belagelementen elastisch gelagert. Auch hier kann es trotz elastischer Lagerung der Belagelemente nachteilig sein, wenn sich der Belagträger nach Lösen der Bremse in Richtung der Scheibenoberfläche der Bremsscheibe verlagert und es z.B. zu einem Schrägverschleiß kommen kann.

Bei einer bekannten Konstruktion eines Bremsbelaghalters (DE 39 05 150 A1) ist eine am Belaghalter befindliche Federanordnung vorgesehen, welche einen am Belagträger vorgesehenen Haltelappen zu hintergreifen vermag. Die Federanordnung ist als Federbügel ausgestaltet, welcher zum Zwecke des Verspannens des Belagträgers in seine federnde Verschlußlage am Haltelappen verschwenkbar ist. Der Federbügel ist nur an einer Längsseite des Belaghalters vorgesehen; die beiden Stirnseiten des Belagträgers sind in der Verschlußlage an Bolzen abgefangen. Durch die einseitige Federverspannung und durch die schrägwinklige Formgebung des Haltelappens ist eine flächendeckend wirkende elastische Verspannung des gesamten Belagträgers nicht in ausreichendem Maße erzielbar.

Bei einer weiterhin bekannten Konstruktion (US-A-2,077,551) ist an einer Bremsklotzanordnung eine durch einen Keil verspannbare Feder vorgesehen, welche zwischen der Rückseite des Bremsklotzträgers und dem Bremsklotzhalter wirkt. Die Feder wirkt ausschließlich als elastisches Zwischenelement, welches durch den den Formschluß zwischen Träger und Halter herbeiführenden Keil verspannbar ist.

Davon ausgehend besteht die Aufgabe der Erfindung darin, eine insbesondere für Schienenfahrzeuge vorgesehene Bremsbelaghalterung so auszugestalten, daß ein Spiel des Belagträgers gegenüber dem Belaghalter absolut sicher und mit einfachen Mitteln ausgeschaltet wird. Dabei soll es in einfacher Weise möglich sein, einen Bremsbelagwechsel vorzunehmen, wenn dies die Verschleißsituation erfordert.

Zur Lösung dieser Aufgabe dienen die Merkmale des Patentanspruches 1.

Durch die mittels eines Spannmechanismus verspannbare, auf dem Rücken des Belaghalters sich erstreckende Federanordnung ist ein einfaches Verspannen des Belagträgers ermöglicht. Ein Klappern des Bremsbelages im Belaghalter, verbunden mit den Nachteilen des Geräusches und des Verschleißes, ist hierdurch vermeidbar; der Bremsbelag folgt beim Lösen der Bremse dem Bremsbelaghalter, insbesondere ist kein Schrägverschleiß durch schief hängende Beläge möglich. Zum Verspannen der Feder sind einfache, mechanisch wirkende Mittel am Rücken des Belaghalters verwendbar, so auch Exzenter-Betätigungen.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Figur 1 und 2 sind Schnittansichten von Bremsbelaghalterungen; und
Figur 3 ist eine gegenüber den Schnittansichten von Figur 1 und 2 stark verkleinerte Draufsicht auf eine Bremsbelaghalterung nach der Erfindung.

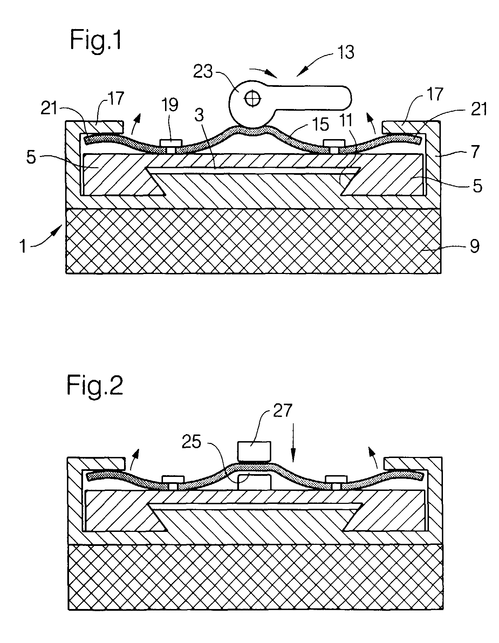

In Figur 1 der Zeichnung ist in Schnittansicht ein herkömmlicher Bremsbelag 1 dargestellt, welcher in der Schwalbenschwanzführung 3 eines Belaghalters 5 eingeschoben ist. Der Bremsbelag besteht aus dem Belagträger in Form des Trägerbleches 7 und aus dem eigentlichen Reibbelag 9. Der Reibbelag 9 ist mit dem Trägerblech 7 in an sich bekannter Weise verbunden, so z.B. verklebt, vernietet oder dgl. Das Trägerblech 7 weist einen der Schwalbenschwanzführung 3 entsprechenden Führungsabschnitt 11 auf, welcher (in nicht dargestellter Weise) endseitig am Kopf des Belaghalters bzw. an einem schwenkbaren Verschlußriegel oder dgl. gehalten ist.

Um im eingebauten Zustand bei gelöster Bremse senkrecht zueinander verlaufende Bewegungen des Bremsbelages relativ zum Belaghalter zu vermeiden, um also ein Klappern des Belages auszuschließen, ist ein Feder- und Spannmechanismus 13 vorgesehen. An der Oberseite des Belaghalters, d.h. an dessen Rücken, ist wenigstens eine Blattfeder 15, in Querrichtung sich erstreckend, vorgesehen, welche mit ihren beiden Enden nach innen gekröpfte Laschen 17 des Trägerbleches 7 untergreift. Die Blattfeder 15 ist mit einem gewissen Freiheitsgrad der Längs- und Biegebeweglichkeit von Haltelementen 19, z.B. in Form von Kopfnieten, an der Rückenseite des Belaghalters gefesselt. Die Blattfeder kann auch ohne derartige Haltelemente geführt sein, was von ausreichender Dimensionierung der beiden Schenkel 21 der Blattfeder 15 unterhalb der Laschen 17 abhängt.

Der Blattfeder 15 ist ein am Belaghalter 5 drehbarer Exzenter 23 zugeordnet, welcher bei Drehung eine gemäß Figur 1 nach unten gerichtete Kraft auf die Blattfeder 15 auszuüben vermag, derart, daß die Enden der Blattfeder als Reaktion hierzu nach oben gerichtet verspannt werden. Die Schenkel 21 heben also das Trägerblech 7 in Richtung des Belaghalters an, wodurch die erwünschte Federverspannung erreicht ist.

Die vorbeschriebene Federverspannung kann in einfacher Weise aufgehoben werden, indem der Exzenter 23 gemäß Darstellung gegen den Uhrzeigersinn gerichtet verschwenkt wird. In gelöstem Zustand der Blattfeder ist das Herausziehen des Bremsbelages 1 aus der Schwalbenschwanzführung 3 ohne weiteres möglich. Im Einbauzustand des Bremsbelags bei verspannter Blattfeder ist der Vorteil einer absolut klapperfreien Führung erzielbar; es ist also bei gelöster Bremse ein Anschlagen des Reibbelages an der Reibfläche der Bremsscheibe des Schienenfahrzeuges ausgeschlossen.

Die in Figur 2 der Zeichnung dargestellte Ausführungsform entspricht weitgehend der in Figur 1 wiedergegebenen, mit der Ausnahme, daß die Blattfeder 15 bei nach unten gerichteter Verspannung, welche mit einem Werkzeug oder manuell erfolgen kann, in eine Nut 25 eines mit dem Belaghalter verbundenen Lagers 27 einhängbar ist. Es besteht auch die Möglichkeit, mehrere Nuten 25 entlang der Baulänge des Lagers 27 vorzusehen, um unterschiedliche Federvorspannungen aufzubringen.

Der Mechanismus wurde vorstehend anhand Figur 1 und Figur 2 unter Bezugnahme auf eine einzelne, in Querrichtung des Belaghalters sich erstreckende Blattfeder erläutert. Grundsätzlich können natürlich mehrere derartige Blattfedern unter Abstand entlang der Baulänge des Bremsbelages vorgesehen sein; die Blattfedern können gegebenenfalls über Längsstege miteinander verbunden sein. Es ist auch möglich, die Blattfedern mit einer zentralen Betätigungseinheit zu verspannen, beispielsweise mit einem Exzenter, der sich in Form einer Exzenterwalze auf der Oberseite aller Blattfedern erstreckt und mit einem gemeinsamen Hebel betätigbar ist.

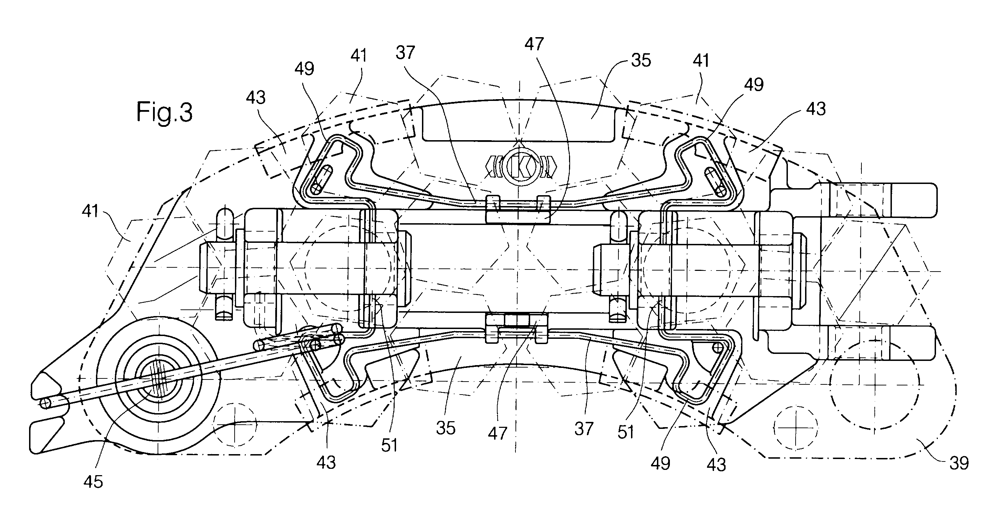

In Figur 3 der Zeichnung ist eine Ausführungsform der Federverspannung eines Bremsbelages wiedergegeben, bei welchem an der Rückenseite eines Belaghalters 35 parallel zur Längsmittellinie desselben sich erstreckend zwei Bügelfedern 37 vorgesehen sind. An der nach Figur 4 abgewandten Seite des Belaghalters ist ein strichpunktiert wiedergegebener Belagträger 39 vorgesehen, an welchem Trägerbleche mit an diesen angeordneten Belagelementen 41 vorgesehen sind. Die strichpunktiert wiedergegebenen Belagelemente 41 sind in einer im einzelnen nicht erläuternden Weise gruppenförmig an (nicht dargestellten) Trägerblechen einander zugeordnet. Der Belagträger 39 ist im Gegensatz zu den Ausführungsformen nach den Figuren 1 und 2 nicht mit einer durchgehenden Schwalbenschwanzführung 3 ausgestattet, sondern umgreift lediglich auf einem Teil seiner Baulänge mittels Laschen 43 die Außenkante des Belaghalters 35. Der Belagträger ist somit auf den Belaghalter aufschiebbar und kann endseitig mittels eines Bolzens 45 axial gesichert sein. Der Bolzen 45 ist in einer im einzelnen nicht näher dargestellten Weise gegen Federverspannung anhebbar und greift in Rastierposition in ein Auge am Ende des Belagträgers ein, so daß dieser gegenüber axialen Verschiebungen in den Laschen 43 abgesichert ist.

Die vorgenannten Bügelfedern 37 sind in einer der Ausführungsform nach Figur 2 vergleichbaren Weise je an einem Lager 47 einhängbar, während die Bogenabschnitte 49 an den beiden Enden der Bügelfedern 37 teilweise unter die Laschen 43 greifen, wie dies vergleichbar und schematisch unter Bezugnahme auf die Ausführungsformen nach den Figuren 1 und 2 dargestellt ist, mit dem Unterschied jedoch, daß sich die Bügelfedern 37 in Längsrichtung des Belagträgers erstrecken, also nicht quer dazu, wie dies die Ausführungsformen nach den Figuren 1 und 2 beinhalten. Die Enden 51 der Bügelfedern 37 können zum Zwecke der Absicherung in an der Rückenseite des Belaghalters befindliche Bohrungen eingesetzt sein. Der Mittelabschnitt der beiden Bügelfedern 37 ist, wie vorstehend erwähnt, jeweils unter Verspannung an einem Lager 47 einhängbar, und zwar in einer nutförmigen Hinterschneidung, wie dies für die Ausführungsform nach Figur 2 unter Bezugnahme auf die Nut 25 erläutert wurde. Bei Verspannung der Bügelfedern 37, d.h. bei in der Ansicht nach Figur 3 abgewandt gerichtetem Verspannen und Einhängen am jeweiligen Lager 47 ist infolge der gewählten Konfiguration der endseitigen Bogenabschnitte 49 ein Verspannen derselben erzielbar, d.h. eine in Richtung der Laschen 43 gerichtete Verspannung, welche dazu führt, daß der Belagträger 39 mit den von ihm getragenen Belagelementen 41 in Richtung des Belaghalters 35 verspannt, also an diesen herangezogen wird. Auch hierdurch ist in einer der Ausführungsform nach den Figuren 1 und 2 vergleichbaren Weise ein im wesentlichen spielfreies Führen des Bremsbelages ermöglicht. Im gelösten Zustand der Bremse ist somit jegliches Spiel zwischen Belaghalter und Belagträger vermieden. Zum Ausbauen des Bremsbelages ist es lediglich erforderlich, die beiden Bügelfedern 37 aus ihrer Nut im Lager 47 herauszudrücken, derart, daß die Federspannung freigegeben ist und sich der Belagträger nach Lösen des Bolzens 45 in Längsrichtung entlang des Belaghalters abziehen läßt.

## Patentansprüche

1. Bremsbelaghalterung, insbesondere für Bremsanlagen für Schienenfahrzeuge, mit einem an einer Sohle eines Belaghalters geführten, wenigstens einen Reibbelag (9,41) tragenden Belagträger, welcher mit einer an einem Rücken des Belaghalters (5,35) geführten, wenigstens einen Seitenbereich des Belagträgers untergreifenden Federanordnung gegenüber dem Belaghalter verspannbar ist, dadurch gekennzeichnet, daß
a) die Federanordnung aus Blatt- oder Bügelfedern (15,37) besteht, welche sich jeweils auf dem Rücken des Belaghalters (5,35) beidseitig der Längsmittellinie desselben erstrecken;
b) die Enden der Blatt- oder Bügelfedern (15,37) Laschen (17,43) untergreifen, welche sich vom Belagträger (7,39) erstrecken und zu beiden Seiten den Belaghalter (5,35) umgreifen; und
c) die Blatt- oder Bügelfedern (15,37) im Mittelteil zwischen den Enden gewölbt ausgebildet und durch mechanische Einwirkung in ihrem Mittelteil derart verspannbar sind, daß die Enden der Blatt- oder Bügelfedern infolge ihres Untergreifens an den Laschen (17,43) den Belagträger (7,39) gegenüber dem Belaghalter verspannen.

2. Bremsbelaghalterung nach Anspruch 1, **dadurch gekennzeichnet,** daß der Mittelteil der Blatt- oder Bügelfedern (15,37) zum Zwecke der Verspannung jeweils in eine Nut eines vom Belaghalters (5,35) sich erstreckenden Lagers (27,47) einhängbar ist.

3. Bremsbelaghalterung nach Anspruch 1, **dadurch gekennzeichnet**, daß der Reibbelag aus einer vom Belagträger (39) getragenen Vielzahl von an Trägerblechen montierten Belagelementen (41) besteht (Figur 3).

## Claims

1. Brake lining holder, in particular for brake installations in rail vehicles, having a lining carrier guided along a floor of a lining holder, and carrying at least one friction lining (9, 41), which lining carrier can be clamped with respect to the lining holder by means of a spring arrangement guided on a ridge of the lining holder (5, 35) and engaging below at least one side region of the lining carrier,
characterised in that
a) the spring arrangement consists of leaf or elongate springs (15, 37) which extend respectively along the ridge of the lining holder (5, 35) on both sides of its longitudinal centre line;
b) the ends of the leaf or elongate springs (15, 37) engage below projections (17, 43) which extend from the lining carrier (7, 39) and engage round the lining holder (5, 35) on both sides; and
c) the leaf or elongate springs (15, 37) are curved in the centre part between the ends and can be clamped by a mechanical action in their centre part in such a way that because the ends of the leaf or elongate springs engage under the projections (17, 43) they clamp the lining carrier (7, 39) with respect to the lining holder.

2. Brake lining holder according to claim 1,
characterised in that for the purpose of clamping, the centre part of the leaf or elongate springs (15, 37) can be slotted respectively into a groove of a bearing (27, 47) extending from the lining holder (5, 35).

3. Brake lining holder according to claim 1,
characterised in that the friction lining comprises a plurality of lining elements mounted on carrier plates and carried by the lining carrier.

## Revendications

1. Fixation de garniture de frein, notamment pour des systèmes de freinage destinés à des véhicules se déplaçant sur rails, comportant un support de garniture guidé sur une semelle d'un porte-garniture et portant au moins une garniture de friction (9, 41), lequel support de garniture peut être bloqué par serrage par rapport au porte-garniture à l'aide d'un ensemble de ressorts tenu sur un dos du porte-garniture (5, 35) et venant en prise sous au moins une région latérale du support de garniture, caractérisée en ce que
a) l'ensemble de ressorts est constitué de ressorts à lame ou en arceau (15, 37), qui s'étendent chacun sur le dos du porte-garniture (5, 35), de part et d'autre de l'axe longitudinal médian de ce dernier;
b) les extrémités des ressorts à lame ou en arceau (15, 37) viennent en prise sous des pattes (17, 43) qui s'étendent du support de garniture (7, 39) et qui entourent des deux côtés le porte-garniture (5, 35); et
c) les ressorts à lame ou en arceau (15, 37) sont dotés d'un cintrage dans la partie médiane, entre les extrémités, et peuvent être bandés, par action mécanique, dans leur partie médiane, de telle sorte que les extrémités des ressorts à lame ou en arceau, de par leur venue en prise sous les pattes (17, 43), bloquent par serrage le support de garniture (7, 39) par rapport au porte-garniture.

2. Fixation de garniture de frein selon la revendication 1, caractérisée en ce que la partie médiane de chacun des ressorts à lame ou en arceau (15,37) est maintenue suspendue, en vue du bandage, dans une gorge d'une pièce d'appui (27, 47) s'étendant du porte-garniture (5, 35).

3. Fixation de garniture de frein selon la revendication 1, caractérisée en ce que la garniture de friction se compose d'une multiplicité d'éléments de garniture montés sur des plaquettes de support, portée par le support de garniture.
